Europäisches Patentamt

European Patent Office

Office européen des brevets

(11) Publication number: **0 254 359 B1**

# EUROPEAN PATENT SPECIFICATION

(45) Date of publication of patent specification: **11.09.91**

(51) Int. Cl.⁵: **B01D 61/00**, B01D 71/04, C10G 21/28, C10G 31/11

(21) Application number: **87201339.6**

(22) Date of filing: **13.07.87**

(54) **Process for separating a fluid mixture containing hydrocarbons and an organic solvent.**

(30) Priority: **18.07.86 GB 8617592**

(43) Date of publication of application:
**27.01.88 Bulletin 88/04**

(45) Publication of the grant of the patent:
**11.09.91 Bulletin 91/37**

(84) Designated Contracting States:
**DE FR GB NL**

(56) References cited:
**EP-A- 0 041 013          EP-A- 0 143 129**
**GB-A- 2 012 186          US-A- 4 060 488**
**US-A- 4 368 112          US-A- 4 432 866**

(73) Proprietor: **SHELL INTERNATIONALE RE-SEARCH MAATSCHAPPIJ B.V.
Carel van Bylandtlaan 30
NL-2596 HR Den Haag(NL)**

(72) Inventor: **Bitter, Johan George Albert
Badhuisweg 3
NL-1031 CM Amsterdam(NL)**
Inventor: **Haan, Johannes Pieter
Badhuisweg 3
NL-1031 CM Amsterdam(NL)**

(74) Representative: **Spierenburg, Jan et al
Shell Internationale Research Maatschappij
B.V. Patents, Licensing & Trade Marks Di-
vision P.O. Box 302
NL-2501 CH The Hague(NL)**

## Description

The invention relates to a process for separating a fluid mixture containing hydrocarbons and an organic solvent.

It is known to separate various hydrocarbon compounds from feed mixtures containing said compounds and a solvent by contacting the feed mixture with one side of a membrane and recovering one or more hydrocarbon compounds and/or solvent from the other (permeate) side of the membrane. Substantial energy-savings can thus be attained compared with conventional (flash) distillation- or stripping processes.

In the known processes for said application polymeric dense non-porous membranes are used. A disadvantage of these membranes consists in their swelling under operating conditions which is caused by the organic solvent present in the fluid feed mixture. Moreover, such dense membranes are preferably applied as ultra-thin layers( having a thickness in the order of a few $\mu$m)in order to attain an acceptable flux through the membranes, which layers are vulnerable and need to be supported on a porous substrate.

Surprisingly, it has now been found that a porous inorganic material can itself be applied as highly selective membrane in a process for separating a fluid mixture containing hydrocarbons and an organic solvent.

Accordingly, the present invention provides a method for solvent recovery from oil extraction processes, comprising the steps of recovering the organic solvent from the hydrocarbon oil by contacting the mixture with one side of a membrane impermeable to hydrocarbon oil and recovering the organic solvent from the other side of the membrane, characterized in that the mixture is fed to the membrane at elevated pressure and the membrane is of capillary porous glass.

It is remarked that EP-A-0143129 discloses a method for solvent recovery from oil extraction processes, comprising the steps of recovering the solvent from the hydrocarbon oil by contacting the mixture with one side of a membrane impermeable to hydrocarbons and recovering solvent from the other side of the membrane.

Further, US-A-4,060,488 discloses the use of porous ceramic membranes for the separation of organic solvents from hydrocarbons.

However, these citations do not relate to the separation of a fluid mixture containing hydrocarbons and an organic solvent by means of a capillary porous glass membrane.

Similar remarks can be made with respect to GB-A-2,012,186.

The process according to the invention is preferably carried out as a reverse osmosis - or a dialysis - process; however, it can also be carried out e.g. as a pervaporation process (in which at least part of the permeate is removed by means of evaporation from the "other side" of the membrane). In a reverse osmosis process, in which a difference in hydraulic pressure between both sides of the membrane is maintained as the driving force, flat membranes are less attractive in case the osmotic pressure is relatively high. Such flat membranes would need to be relatively thick or be supported in order to have sufficient strength to withstand the applied pressure differences, and consequently the permeate flux through flat membranes would be relatively low in this case. In contrast with flat membranes, tubular membranes, and in particular capillary membranes, can withstand relatively high pressure differences between their inner- and outer walls for a given wall thickness and are therefore preferably applied in the process according to the invention.

Moreover, the inorganic membranes applied in the process according to the invention can withstand relatively high temperatures, which makes it possible to separate hot fluid mixtures therewith.

The wall thickness of the aforementioned tubular (capillary) membranes may vary substantially, depending on the application thereof and the material used; a suitable wall thickness is in the range from 1 $\mu$m to 2 mm, and preferably from 5 $\mu$m to 100 $\mu$m.

The diameter of tubular (e.g. capillary) membranes which are preferably applied is from 10 $\mu$m to 10 mm, and most preferably from 50 $\mu$m to 1 mm.

Various porous inorganic materials can be used as membranes in the process according to the invention, provided that said material is substantially impermeable to the hydrocarbons which are to be separated from an organic solvent. Preferably, the applied membranes contain a ceramic material which can be crystalline or substantially amorphous, in particular alumina, or porous glass or quartz.

The above-described porous membranes can be suitably applied as such i.e. in the form of (homogeneous) single layers. However, it is also possible to apply composite porous membranes in the process according to the invention which have been (surface) modified with e.g. hydrophobic compounds such as silicone- and/or hydrocarbon-containing compounds or which have been subjected to treatment with one or more acid- and/or alkaline-compounds. Such a modification can be carried out by any method known in the art e.g. spray-coating, impregnation, precipitation or plasma-etching.

Furthermore, said porous membranes can be covered by depositing thereon a very fine dispersion of inorganic (e.g. silica) particles having a diameter of e.g. 1-100 nm.

In addition, or alternatively to the modifications discussed hereinabove, the membranes can be subjected to a heat treatment, suitably carried out at temperatures from 100 °C up to the softening temperature of the porous membrane material, which treatment may be carried out at reduced, atmospheric or elevated pressure, optionally in the presence of an inert-, oxidizing- or reducing-fluid.

The ready membranes as applied in the process according to the invention preferably contain pores having a substantially uniform size (i.e. the diameter in case the pores are substantially cylindrical in form) from 0.5-1000 nm, in particular from 1-100 nm, in order to attain the envisaged separation of solvent from hydrocarbons by allowing solvent molecules to permeate through the membranes, retaining hydrocarbon (e.g. oil) molecules at the feed-side of the membranes.

The pressure differential applied between the one side of the membrane contacted with the fluid feed mixture (the feed-side) and the other (permeate) side is suitably from 2-200 bar, and preferably from 10-80 bar.

The temperature at which the present process is carried out may vary within a wide range and is not critical as long as the applied membranes can withstand the operating conditions. A fluid feed temperature from -40 °C to +400 °C is suitable in most cases, whereas a temperature from -20 °C to +300 °C is preferred.

The process according to the invention is well suited for applications in which a fluid feed mixture containing as the organic solvent an aromatic- and a polar aliphatic-solvent is available. This is the case when hydrocarbon oils have been subjected to a solvent dewaxing treatment with said organic solvent(s). During such a treatment usually a toluene/methyl ethyl ketone solvent mixture is added to a wax-containing oil, followed by removing wax (e.g. by means of filtration). The solvents are usually recovered from the dewaxed hydrocarbon oil in a conventional flashing process with high energy consumption. With the process according to the invention it is possible to reduce said energy consumption considerably by recovering a major portion, or even substantially all, of the solvents via membranes and separating only the remaining portion of solvents, if any, by conventional means.

The aromatic solvent: polar aliphatic solvent weight ratio in the feed mixture is suitably from 0.1-10, and preferably from 0.5-5.

Other preferred applications of the process according to the invention are the separation of furfural from furfural/lubricating oil mixtures obtained from a furfural extraction process, and the separation of solvents (e.g. liquid propane and/or butane) from deasphalted hydrocarbon oil residue fractions.

The organic solvent: hydrocarbons weight ratio in the feed mixture is suitably from 0.5-5, and preferably from 1-3. An organic solvent: hydrocarbons weight ratio of less than 0.5 usually has a negative influence on the present process because the solvent flux through the membranes then becomes unacceptably low at a given pressure differential between both sides of the membranes due to the high osmotic pressures which reduce the driving force.

Because of the above-mentioned influence of the organic solvent: hydrocarbons weight ratio in the feed mixture on the solvents flux it is preferred to carry out the process according to the invention with a number of membrane units in a series-flow set-up, thus increasing the oil-content of the feed mixture gradually in subsequent membrane units and maintaining a relatively high solvents ratio in the upstream membrane units. This way the total required membrane area can be reduced in comparison with a single-stage membrane separation process for a given quantity of feed mixture to be treated. In order to avoid, or at least reduce fouling and concentration polarization of the membranes, the feed mixture is preferably passed along one side of at least one following membrane.

In order to prevent concentration polarization even better, part of the feed mixture which has been passed along one side of a membrane can be recirculated by reintroducing said part into the feed mixture to be passed along said side of the same membrane.

The invention further relates to hydrocarbons whenever obtained by a separation process as described hereinbefore.

The following Example illustrates the invention.

EXAMPLE

A liquid feed mixture containing equal amounts by weight of dewaxed bright stock (hydrocarbon oil obtained by dewaxing a vacuum residue), methyl ethyl ketone and toluene was contacted at a pressure of 19 bar abs. and a temperature of 20 °C with the inner channels of porous capillary glass membranes having a pore size of 3 nm, an outer diameter of 460 μm and a wall thickness of 45 μm. A selectivity (α) of 20 was attained, defined as:

$$\alpha = \frac{Y}{X} \text{ solvent} \quad \times \quad \frac{X}{Y} \text{ oil},$$

wherein X = concentration in the feed mixture and Y = concentration in the permeate.

**Claims**

1. A method for solvent recovery from oil extraction processes, comprising the steps of recovering the organic solvent from the hydrocarbon oil by contacting the mixture with one side of a membrane impermeable to hydrocarbon oil and recovering the organic solvent from the other side of the membrane, characterized in that the mixture is fed to the membrane at elevated pressure and the membrane is of capillary porous glass.

2. The process as claimed in claim 1 characterized in that the pore size of the membrane is from 0.5-1000 nm, preferably from 1-100 nm.

3. The process as claimed in claim 1 or 2 characterized in that the pressure differential applied between the one side of the membrane contacted with the fluid mixture and the other side is from 2-200 bar, preferably from 10-80 bar.

4. The process as claimed in any one of claims 1-3 characterized in that the organic solvent comprises an aromatic- and a polar aliphatic-solvent.

5. The process as claimed in any one of claims 1-4 characterized in that the feed mixture has been obtained by subjecting a hydrocarbon oil to a dewaxing treatment with the organic solvent.

6. The process as claimed in any one of claims 1-5 characterized in that the organic solvent hydrocarbons weight ratio in the feed mixture is from 0.5-5, and preferably from 1-3.

Revendications

1. Procédé de récupération de solvant à partir de procédés d'extraction du pétrole, comprenant les étapes de récupération du solvant organique à partir de l'huile hydrocarbonée par mise en contact du mélange avec un côté d'une membrane imperméable à l'huile hydrocarbonée et de récupération du solvant organique à partir de l'autre côté de la membrane, caractérisé en ce qu'on alimente la membrane avec le mélange à une pression élevée et en ce que la membrane est faite de verre poreux capillaire.

2. Procédé selon la revendication 1, caractérisé en ce que la taille de pores de la membrane est de 0,5 à 1000 nm, de préférence de 1 à 100 nm.

3. Procédé selon la revendication 1 ou 2, caractérisé en ce que le différentiel de pression appliqué entre le côté de la membrane mis en contact avec le mélange fluide et l'autre côté est de 2-200 bars, de préférence de 100-80 bars.

4. Procédé selon l'une quelconque des revendications 1-3, caractérisé en ce que le solvant organique comprend un solvant aromatique et un solvant aliphatique polaire.

5. Procédé selon l'une quelconque des revendications 1-4, caractérisé en ce que le mélange de charge a été obtenu en soumettant une huile hydrocarbonée à un traitement de déparaffinage avec le solvant organique.

6. Procédé selon l'une quelconque des revendications 1 à 5 caractérisé en ce que le rapport pondéral solvant organique:hydrocarbures dans le mélange de charge est de 0,5-5, et de préférence de 1-3.

Patentansprüche

1. Eine Methode zur Lösungsmittelgewinnung aus Ölextraktionsverfahren, umfassend die Stufen der Gewinnung des organischen Lösungsmittels aus dem Kohlenwasserstofföl durch Kontaktieren der Mischung mit einer Seite einer für Kohlenwasserstofföl undurchlässigen Membran und der Gewinnung des organischen Lösungsmittels von der anderen Seite der Membran, dadurch gekennzeichnet, daß die Mischung unter erhöhtem Druck auf die Membran aufgebracht wird und die Membran aus kapillarem porösen Glas besteht.

2. Das Verfahren, wie in Anspruch 1 beansprucht, dadurch gekennzeichnet, daß die Porengröße der Membran 0,5 bis 1000nm, vorzugsweise 1 bis 100 nm beträgt.

3. Das Verfahren, wie in Anspruch 1 oder 2 beansprucht, dadurch gekennzeichnet, daß der Druckunterschied zwischen dem auf die eine, mit der Fluidmischung kontaktierte Seite der Membran aufgebrachten Druck und dem auf die andere Seite aufgebrachten Druck 2 bis 200 bar, vorzugsweise 10 bis 80 bar beträgt.

4. Das Verfahren wie in einem der Ansprüche 1 bis 3 beansprucht, dadurch gekennzeichnet, daß das organische Lösungsmittel ein aromatisches und ein polares aliphatisches Lösungsmittel umfaßt.

5. Das Verfahren, wie in einem der Ansprüche 1 bis 4 beansprucht, dadurch gekennzeichnet, daß die Zuspeisungsmischung durch Unterwerfen eines Kohlenwasserstofföls einer Entparaffinierungsbehandlung mit dem organischen Lösungsmittel erhalten worden ist.

6. Das Verfahren wie in einem der Ansprüche 1 bis 5 beansprucht, dadurch gekennzeichnet, daß das Gewichtsverhältnis von organischem Lösungsmittel zu Kohlenwasserstoffen in der Zuspeisungsmischung 0,5:1 bis 5:1, und vorzugsweise 1:1 bis 3:1 beträgt.